# EUROPÄISCHE PATENTSCHRIFT

(11) **EP 0 943 512 B1**
(45) Veröffentlichungstag und Bekanntmachung des Hinweises auf die Patenterteilung: **30.01.2008**
(21) Anmeldenummer: 99103345.7
(22) Anmeldetag: 20.02.1999
(51) Int. Cl.: B60S 1/52

(54) **Wisch-Wasch-Anlage für Scheiben von Fahrzeugen**
Wash/wipe device for vehicle windscreens
Dispositif essuie-glace/lave-glace pour des pare-brises de véhicules

(30) Priorität: 14.03.1998 DE 19811183
(43) Veröffentlichungstag der Anmeldung: 22.09.1999
(73) Patentinhaber: Volkswagen Aktiengesellschaft, 38436 Wolfsburg (DE)
(72) Erfinder: Mlynikowski, Frank, 38442 Wolfsburg (DE)

(56) Entgegenhaltungen:
- EP-A- 0 351 527
- EP-A- 0 489 631
- EP-A- 0 566 470
- FR-A- 2 604 962
- GB-A- 2 091 544
- US-A- 3 827 101
- US-A- 4 516 288

## Beschreibung

Die Erfindung betrifft eine Wisch-Wasch-Anlage für Scheiben von Fahrzeugen, insbesondere Personenkraftfahrzeugen, bei der zumindest ein motorisch angetriebener Scheibenwischer in Verbindung mit einer Waschflüssigkeit zur Reinigung der jeweiligen Scheibe eingesetzt wird.

Wisch-Wasch-Anlagen mit Scheibenwischern, die einen Wischerarm und ein an diesem angeordnetes Wischerblatt aufweisen, sind nach herkömmlicher Bauart mit mindestens einer vom Scheibenwischer getrennt angeordneten Spritzdüse für die Waschflüssigkeit versehen. Um den Abstand der Spritzdüse zur Scheibe zu verringern und den Wasserauftrag weitgehend unabhängig von der Fahrgeschwindigkeit und einer Windbeaufschlagung zu machen, wird die Spritzdüse bei jüngeren Anlagen auch am Wischerarm angeordnet. Mit einer solchen Anordnung können die Sichtverhältnisse verbessert und der Waschflüssigkeitsverbrauch gesenkt werden, weil die Waschflüssigkeit definierter und gezielter eingesetzt wird. Überdies können durch die Verlagerung der Spritzdüse von der Karosserie, insbesondere der Motorhaube, auf einen Wischerarm die Aerodynamik und das optische Erscheinungsbild des Fahrzeugs verbessert werden.

Es sind schon einige diesem Konzept folgende Wisch-Wasch-Anlagen bekannt geworden, so auch aus der EP 0 489 631 B1, der EP 0 566 470 B1 und der US 827 101 A. In den beiden letzteren ist eine Wisch-Wasch-Anlage offenbart, bei der die Spritzdüse an der Unterseite des Scheibenwischerarmes angeordnet und mit Mitteln für die Zuleitung von Waschflüssigkeit verbunden ist. Bei der EP 0 566 470 B1 ist die Spritzdüse entweder so ausgebildet, dass diese einen Strahl parallel zum Scheibenwischerarm auf die Scheibe spritzt, oder so, dass sie im spitzen Winkel zum Wischerblatt auf jede Seite desselben einen Strahl auf die Scheibe spritzt. Hinsichtlich der bespritz- oder besprühbaren Fläche vor dem Wischerblatt lässt dieser Gegenstand Wünsche offen, da nur der Teil der Scheibe vor dem Wischerblatt bespritzt werden kann, der in radialer Richtung weiter außen liegt. Überdies stören die Düse und die Mittel zur Zuleitung der Waschflüssigkeit das optische

Erscheinungsbild. Das trifft im Wesentlichen auch auf die Wisch-Wasch-Anlage nach der US 3 827 101 A zu, bei der die Spritzdüse mehrere Spritzöffnungen aufweist.

Die DE 195 15 611 A1 hat eine Wisch-Wasch-Anlage für Scheiben von Kraftfahrzeugen mit einem an einer Scheibenwischerwelle angeordneten Wischerarm und einem Wischerblatt zum Gegenstand, bei der auf der Scheibenwischerwelle zumindest eine Spritzdüse befestigt ist, die radial zur Scheibenwischerwelle nach außen und in einem flachen Winkel auf die Scheibe ausgerichtet ist. Die Anlage ist mit Mitteln zur Druckveränderung der zur Spritzdüse gelangenden Waschflüssigkeit versehen, um den Druck derselben in Anhängigkeit von der Stellung des Scheibenwischerblattes zu verändern und damit den Verbrauch an Waschflüssigkeit zu senken. Nicht offenbart ist, wohin der an der Spritzdüse austretende Strahl, bezogen auf das Wischerblatt, gerichtet ist. Durch die Anordnung der Spritzdüse auf der Scheibenwischerwelle muss der Strahl einen erheblichen Spritzweg zurücklegen, ehe er im Bereich des Wischerblattes auf die Scheibe trifft, was auch einen entsprechend hohen Druck erforderlich macht, so dass der Strahlverlauf vom Fahrtwind und anderen Windbeaufschlagungen beeinflussbar ist.

Gegenstand der EP 0 351 527 A2 ist eine Wischvorrichtung für Scheiben von Kraftfahrzeugen mit einem auf einer hohlen Scheibenwischerwelle sitzenden Wischerarm, bei der an dem den Wischerarm mit der Scheibenwischerwelle verbindenden Gelenkteil wenigstens eine auf die zu wischende Scheibe gerichtete Spritzdüse angeordnet ist, die die Waschflüssigkeit auf eine Seite des Wischerblattes sprüht. Die Flüssigkeitszufuhr zu dieser erfolgt durch ein in der Scheibenwischerwelle angeordnetes Bauelement, in dem ein Zuführkanal für die Spritzdüse ausgebildet ist. Vorzugsweise sind jedoch zwei Spritzdüsen vorgesehen, die jeweils mit einem im Bauelement separat ausgebildeten Zuführkanal verbunden sind und die die Waschflüssigkeit jeweils auf eine Seite des Wischerblattes sprühen. Die Anordnung und Ausbildung des insbesondere mit zwei Zuführkanälen versehenen Bauelementes und der mit diesen verbundenen Spritzdüsen ist aufwändig.

Es ist Aufgabe der Erfindung, eine Wisch-Wasch-Anlage für Scheiben von Fahrzeugen nach dem Oberbegriff des Anspruchs 1 mit einer erhöhten Reinigungsleistung und mit reduziertem Aufwand zu schaffen.

Diese Aufgabe wird bei einer Wisch-Wasch-Anlage nach dem Oberbegriff des Anspruchs 1 mit dessen kennzeichnenden Merkmalen gelöst.

Danach ist die am Gelenkteil eines Scheibenwischers angeordnete Spritzdüse in das Gelenkteil des Wischerarmes integriert und mit zwei Sprühöffnungen versehen, die jeweils einen Waschflüssigkeitsstrahl im spitzen Winkel zum Wischerblatt auf jeweils eine Seite desselben sprühen. Durch diese Anordnung ist der Waschflüssigkeitsstrahl weitestgehend wind- und fahrtwindunabhängig, da der Spritzweg kurz ist. Der jeweilige Strahl hat immer den gleichen Abstand zum Wischerblatt und kann die Scheibe bei einer entsprechenden Gestaltung der Düse in einem weiten Bereich entlang und vor der Auflagelinie des Wischerblattes besprühen oder bespritzen, was den Reinigungseffekt erheblich erhöht. Der Wischerarm wird nicht durch den Waschflüssigkeitsstrahl bewegt, wodurch Waschflüssigkeitsverluste durch Verspritzen des Strahles beim Auftreffen auf den Wischerarm vermieden werden. Insbesondere auch bei großen Scheiben und somit langen Wischerblättern ist die Lösung aus vorstehend genannten Gründen vorteilhaft. Auch ist das optische Erscheinungsbild des Wischerarmes durch die Anordnung der Spritzdüse und die zu dieser führende Waschflüssigkeitszuleitung im Gelenkteil nicht gestört, und es wird in diesem vorhandener und bislang nicht genutzter Raum verwendet.

Dabei können die beiden Sprühöffnungen in Anhängigkeit von der Bewegungsrichtung des Wischerarmes mit entsprechenden Mitteln abwechselnd gesperrt und geöffnet werden, wodurch der Waschflüssigkeitsverbrauch erheblich reduziert wird. Alternativ dazu kann die Spritzdüse in einem vorbestimmten Winkelbereich schwenkbar angeordnet sein, derart, dass sie bei einer Bewegungsumkehr des Wischerarmes in die jeweils andere Richtung geschwenkt wird, so dass auf diese Weise sichergestellt ist, dass die Waschflüssigkeitsstrahlen stets vor dem Wischerblatt auf die Scheibe treffen. Eine derartige Lösung empfiehlt sich insbesondere bei einem über einen Halbkreisbogen schwenkenden Scheibenwischer.

Die Spritzdüse kann vorteilhaft auch elektrisch beheizbar sein, insbesondere mit einer um diese angeordneten Heizwendel. Damit kann die Funktionstüchtigkeit der Spritzdüse auch bei extremen Witterungsbedingungen sichergestellt und eine eingefrorene Spritzdüse auf einfache Weise funktionstüchtig gemacht werden.

Die Spritzdüse kann des Weiteren so ausgebildet sein, dass sie den Waschflüssigkeitsstrahl entlang des Wischerblattes über einen wesentlichen Teil der Länge desselben auffächert, um so einen großen Teil der zu reinigenden Scheibe zu besprühen. Die Erfindung wird nachstehend an einem Ausführungsbeispiel erläutert. In der zugehörigen Zeichnung zeigen, teilweise schematisch:
- Fig. 1:: einen Scheibenwischer mit einer im Wischerarm angeordneten Spritzdüse und
- Fig. 2:: eine Draufsicht auf einen Teil des Wischerarmes.

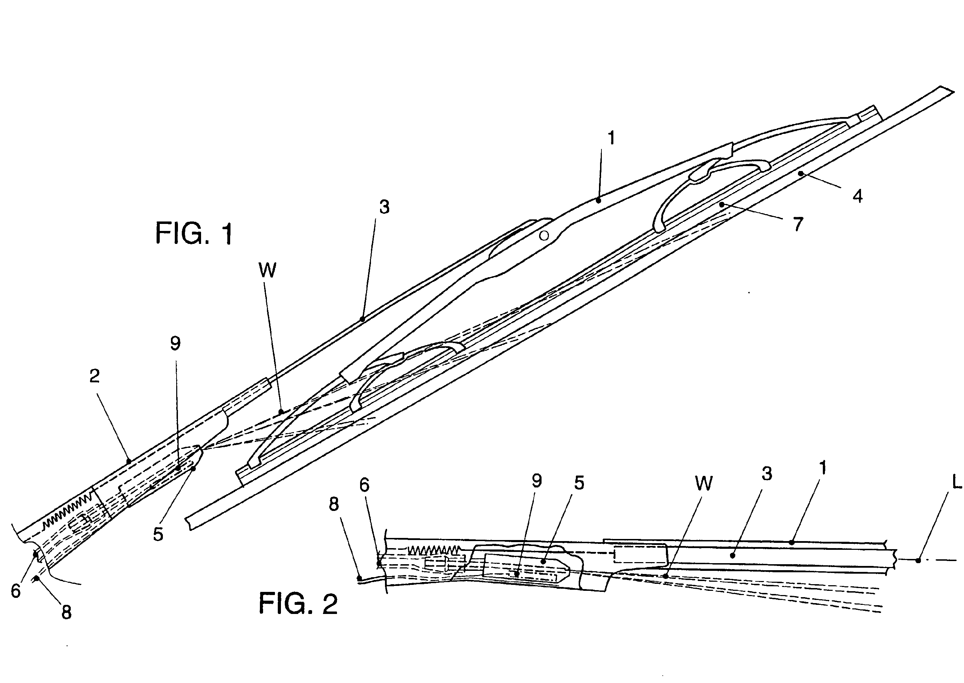

In Fig. 1 ist ein Scheibenwischer mit einem Wischerblatt 1 und einem mit einem Gelenkteil 2 zur Anordnung an einer Antriebswelle versehenen Wischerarm 3 dargestellt, der an einer Scheibe 4 anliegt. Das Gelenkteil 2 ist in bekannter Weise an einer Antriebswelle befestigt (nicht dargestellt). Im Gelenkteil 2, das in bekannter Weise einen U-förmigen Querschnitt hat, der zur Scheibe 4 geöffnet ist, ist eine Spritzdüse 5 angeordnet und mit einer flexiblen Zuleitung 6 für eine Waschflüssigkeit W versehen. Die Düse ist derart angeordnet, daß sie die Waschflüssigkeit W über das bzw. vor das in im wesentlichen waagerechter und vorbestimmter Ausgangsstellung befindliche Wischerblatt 1 und den Wischergummi 7 spritzt. Die Spritzdüse ist bei dieser Anordnung weitgehend vor Verschmutzung geschützt.

Fig. 2 zeigt die Anordnung der Spritzdüse 5 und den aus dieser austretenden Waschflüssigkeitsstrahl. Diese (5) ist gegenüber der Auflagelinie L des Wischergummis 7 in einem spitzen Winkel angeordnet. Um ein Einfrieren der in der Spritzdüse 5 befindlichen Waschflüssigkeit (W) bzw. eingedrungener Feuchtigkeit zu verhindern oder in dieser gebildetes Eis aufzutauen, ist sie mit einer Heizwicklung versehen, angedeutet durch die elektrische Leitung 8 und einen Widerstand 9. Die Spritzdüse 5 selbst ist so ausgebildet, daß sie einen entlang des Wischerblattes 1 aufgefächerten Waschflüssigkeitsstrahl ausbildet.

## Patentansprüche

1. Wisch-Wasch-Anlage für Scheiben von Fahrzeugen mit einem Scheibenwischer, der ein Wischerblatt und einen mit einem Gelenkteil versehenen Wischerarm aufweist, mit einer am Gelenkteil angeordneten und mit einer Waschflüssigkeitszuleitung verbundenen Spritzdüse, **dadurch gekennzeichnet, dass** die Spritzdüse (5) zwei Sprühöffnungen aufweist, die jeweils einen Waschflüssigkeitsstrahl (W) im spitzen Winkel zum Wischerblatt (1) auf jeweils eine Seite desselben (1) sprühen.

2. Wisch-Wasch-Anlage nach Anspruch 1, **dadurch gekennzeichnet, dass** die Spritzdüse (5) so angeordnet ist, dass die Waschflüssigkeit (W) jeweils vor das in seiner vorbestimmten Ausgangsstellung im wesentlichen in waagerechter Anordnung befindliche und auch vor das in dieser Anordnung bewegte Wischerblatt (1) gesprüht wird.

3. Wisch-Wasch-Anlage nach Anspruch 1 oder 2, **dadurch gekennzeichnet, dass** die Spritzdüse (5) elektrisch beheizt ist.

4. Wisch-Wasch-Anlage nach einem der vorhergehenden Ansprüche, **dadurch gekennzeichnet, dass** die Spritzdüse (5) so ausgebildet ist, dass sie den Waschflüssigkeitsstrahl über einen wesentlichen Teil der Länge des Wischerblattes (1) auffächert.

## Claims

1. Wash/wipe device for vehicle windscreens, having a windscreen wiper which has a wiper blade and a wiper arm which is provided with an articulated part, and having a spray nozzle which is arranged on the articulated part and is connected to a wiper fluid feedline, **characterized in that** the spray nozzle (5) has two spray openings which each spray a jet (W) of washing fluid onto in each case one side of the wiper blade (1) at an acute angle with respect to said wiper blade (1).

2. Wash/wipe device according to Claim 1, **characterized in that** the spray nozzle (5) is arranged in such a way that the washing fluid (W) is sprayed in each case in front of the wiper blade (1) which is in an essentially horizontal arrangement in its predetermined initial position, and also in front of the wiper blade (1) which is moved in this arrangement.

3. Wash/wipe system according to Claim 1 or 2,
**characterized in that** the spray nozzle (5) is heated electrically.

4. Wash/wipe system according to one of the preceding claims, **characterized in that** the spray nozzle (5) is embodied in such a way that it fans out the jet of washing fluid over a significant part of the length of the wiper blade (1).

## Revendications

1. Installation d'essuie-glace/lave-glace pour des vitres de véhicules, comprenant un essuie-glace qui présente un balai d'essuie-glace et un bras d'essuie-glace pourvu d'une partie articulée, avec une buse d'injection disposée sur la partie articulée et connectée à une conduite d'amenée de liquide de lavage, **caractérisée en ce que** la buse d'injection (5) présente deux ouvertures de pulvérisation qui pulvérisent chacune un jet de liquide de lavage (W) à angle aigu par rapport au balai d'essuie-glace (1) sur un côté respectif de celui-ci (1).

2. Installation d'essuie-glace/lave-glace selon la revendication 1, **caractérisée en ce que** la buse d'injection (5) est disposée de telle sorte que le liquide de lavage (W) soit pulvérisé à chaque fois devant le balai d'essuie-glace (1) se trouvant dans un agencement essentiellement horizontal dans sa position de départ prédéfinie, et également devant le balai d'essuie-glace (1) déplacé dans cet agencement.

3. Installation d'essuie-glace/lave-glace selon la revendication 1 ou 2, **caractérisée en ce que** la buse d'injection (5) présente un chauffage électrique.

4. Installation d'essuie-glace/lave-glace selon l'une quelconque des revendications précédentes, **caractérisée en ce que** la buse d'injection (5) est réalisée de telle sorte qu'elle étale en éventail le jet de liquide de lavage sur une partie considérable de la longueur du balai d'essuie-glace (1).
